# EUROPÄISCHE PATENTSCHRIFT

(11) **EP 3 917 449 B1**
(45) Veröffentlichungstag und Bekanntmachung des Hinweises auf die Patenterteilung: **21.08.2024**
(21) Anmeldenummer: 20720742.4
(22) Anmeldetag: 02.04.2020
(51) Int. Cl.: A61C 17/22, A46B 7/04

(54) **ZAHNZWISCHENRAUM-REINIGUNGSGERÄT**
DEVICE FOR CLEANING INTERDENTAL SPACES
APPAREIL DE NETTOYAGE D'ESPACES INTERDENTAIRES

(30) Priorität: 03.04.2019 DE 102019002448
(43) Veröffentlichungstag der Anmeldung: 08.12.2021
(73) Patentinhaber: Scholz, Klaus, 91054 Erlangen (DE); Schwesig, Günter, 91054 Erlangen (DE); Zimmermann, Andreas, 91080 Uttenreuth (DE)
(72) Erfinder: Scholz, Klaus, 91054 Erlangen (DE); Schwesig, Günter, 91054 Erlangen (DE); Zimmermann, Andreas, 91080 Uttenreuth (DE)
(74) Vertreter: FDST Patentanwälte
(86) Internationale Anmeldenummer: PCT/EP2020/059474
(87) Internationale Veröffentlichungsnummer: WO 2020/201468

(56) Entgegenhaltungen:
- WO-A1-03/011073
- WO-A1-03/086231
- DE-A1- 10 355 446
- DE-U1- 202011 003 537
- JP-A- H07 163 420
- US-A- 4 420 851
- US-A1- 2005 235 438

## Beschreibung

Die Erfindung betrifft ein Zahnzwischenraum-Reinigungsgerät.

Geräte zum Reinigen der Zahnzwischenräume sind weitestgehend bekannt als manuell geführte Zahnzwischenraumbürsten - auch als Interdentalbürsten bezeichnet. Daneben wird häufig auch Zahnseide verwendet. Nachteilig bei beiden Varianten ist die vergleichsweise schwierige Handhabbarkeit. Zahnseide wird üblicherweise zwischen zwei Händen gespannt, so dass im Mundraum kaum Bewegungsraum übrig bleibt. Interdentalbürsten sind meist ebenfalls klein.

Bekannt sind aber auch elektrisch betriebene Interdental-Reinigungsgeräte, die bspw. in Schwingung, in Drehung oder in eine Kippbewegung versetzt werden. Solche Interdental-Reinigungsgeräte sind unter anderem aus WO 03/011073 A1, JP H07 163420 A, WO 03/086231 A1 und DE 20 2011 003 537 U1 bekannt. Aus US 4,420,851 A, US 2005 235438 A1 und DE 103 55 446 A1 sind allgemein elektrische Zahnbürsten bekannt.

Der Erfindung liegt die Aufgabe zugrunde, die Reinigung der Zahnzwischenräume zu verbessern.

Diese Aufgabe wird erfindungsgemäß gelöst durch ein Zahnzwischenraum-Reinigungsgerät mit den Merkmalen des Anspruchs 1. Vorteilhafte und teils für sich erfinderische Ausführungsformen und Weiterbildungen sind in den Unteransprüchen und der nachfolgenden Beschreibung dargelegt.

Das erfindungsgemäße Zahnzwischenraum-Reinigungsgerät (kurz als "Interdentalreiniger" bezeichnet) weist ein Gehäuse auf, das einen Handgriff bildet, und einen Bürstenhalter zur Halterung einer Zahnzwischenraumbürste. Des Weiteren weist der Interdentalreiniger eine Antriebsvorrichtung auf, die dazu eingerichtet ist, eine rotatorische sowie eine translatorische Bewegung des Bürstenhalters und, eventuell, einer darin gehalterten Zahnzwischenraumbürste (auch: "Interdentalbürste") zu erzeugen.

Aufgrund der rotatorischen Bewegung wird eine vergleichsweise hohe Reinigungsleistung in den Zahnzwischenräumen erreicht. Diese wird zusätzlich durch die translatorische Bewegung, d. h. einer Vor- und Zurückbewegung unterstützt. Der Nutzer braucht in diesem Fall den Interdentalreiniger nur an der für ihn korrekten Position halten. Ein manuelles Hin- und Herbewegen des Interdentalreinigers kann dabei sogar unterbleiben.

In einer bevorzugten Ausführung ist die Antriebsvorrichtung elektromechanisch ausgebildet.

Weiter bevorzugt umfasst die Antriebsvorrichtung einen Elektromotor.

In einer zweckmäßigen Weiterbildung weist das Gehäuse insbesondere im Bereich des Handgriffs eine Aufnahme für einen Energiespeicher für die Antriebsvorrichtung auf. Bspw. ist der Energiespeicher durch eine oder mehrere Batterien, optional Akkumulatoren gebildet. Optional ist der Energiespeicher im wiederaufladbaren Fall dazu eingerichtet, ohne aus dem Gehäuse entnommen werden zu brauchen, geladen zu werden. Dazu weist der Interdentalreiniger eine Ladeschnittstelle, bspw. einen galvanischen Anschluss oder eine Ladespule zum kontaktlosen, insbesondere induktiven Laden auf. Optional weist der Energiespeicher in diesem Fall auch eine Ladeelektronik auf, die den Ladezustand und/oder der Ladevorgang überwacht.

In einer zweckmäßigen Ausführung weist der Interdentalreiniger eine Steuerungselektronik auf, die dazu eingerichtet ist, insbesondere während eines Putzvorgangs (d. h. vorzugsweise während einer Zeitspanne zwischen Aktivierung und Deaktivierung der Antriebsvorrichtung) eine wiederkehrende Rotationsumkehr durchzuführen

In einer optionalen Ausgestaltung weist die Antriebsvorrichtung einen Spindeltrieb zur Erzeugung der translatorischen Bewegung auf. Insbesondere ist die Gewindespindel des Spindeltriebs dabei in Richtung der translatorischen Bewegung verschiebbar mit der Motorwelle des Elektromotors gekoppelt. In diesem Fall ist die Spindelmutter unverschieblich mit dem Gehäuse gekoppelt. Dadurch wird die Gewindespindel bei Drehung des Elektromotors in Längsrichtung (die der Richtung der translatorischen Bewegung entspricht) verschoben. In einer einfachen Variante weist der Interdentalreiniger in diesem Fall zwei Endschalter auf, die mit der Steuerungselektronik gekoppelt sind. Letztere ist dabei vorzugsweise dazu eingerichtet, bei Auslösung eines der Endschalter die Drehrichtung des Elektromotors zu wechseln.

In einer Variante weist die Antriebsvorrichtung einen zweiten Elektromotor auf, mittels dessen die Getriebespindel angetrieben wird. Der erste Elektromotor dient in diesem Fall (weiterhin) dazu, die rotatorische Bewegung zu erzeugen. Der Vorteil liegt hierbei darin, dass Geschwindigkeit und Umfang der translatorischen Bewegung von der Rotationsgeschwindigkeit der Interdentalbürste unabhängig gewählt werden kann.

In einer weiteren optionalen Ausführung weist die Antriebsvorrichtung einen Hubmagneten auf, der zur Erzeugung der translatorischen Bewegung dient und vorzugsweise als Elektromagnet ausgebildet ist. Bspw. ist der Hubmagnet starr mit der Motorwelle gekoppelt und dazu eingerichtet, den Bürstenhalter insbesondere durch Aktivierung und Deaktivierung (vorzugsweise gegen eine Rückstellfeder) translatorisch zu bewegen. Alternativ ist der Hubmagnet starr am Gehäuse befestigt, bspw. tunnel- oder ringartig und von der Motorwelle durchlaufen. Der Bürstenhalter ist in Längsrichtung verschiebbar aber in Drehrichtung starr mit dem Hubmagneten oder der Motorwelle gekoppelt. Weiter alternativ ist der Hubmagnet mit dem Bürstenhalter gekoppelt und wird mithin bei Aktivierung und Deaktivierung mit diesem hin- und herbewegt.

Wiederum in einer optionalen Ausführung weist die Antriebsvorrichtung ein Exzenter-Getriebe auf. Diese treibt bspw. mittels einer Art Pleuel den Bürstenhalter zur translatorischen Bewegung an.

In einer bevorzugten Ausführung weist die Antriebsvorrichtung eine Führungskulisse auf, die zur Erzeugung der translatorischen Bewegung dient. In dieser Führungskulisse gleitet vorzugsweise ein Kulissenstein. Entweder die Führungskulisse oder der Kulissenstein ist ortsfest relativ zu dem Gehäuse, so dass bei schräg zur Längsrichtung verlaufender Führungskulisse die translatorische Bewegung erzeugt wird. Je flacher die Kulisse dabei gegen eine senkrecht zur Motorwelle (oder der Längsrichtung) stehenden Ebene angestellt ist, desto geringer ist dabei der bei Drehung des Motors vollzogene "Hub" des Bürstenhalters.

Erfindungsgemäß weist die Antriebsvorrichtung eine Mitnehmerhülse auf. Der Bürstenhalter ist dabei mittels einer Magnetkupplung mit der Mitnehmerhülse gekoppelt. Der Bürstenhalter weist in diesem Fall wenigstens einen Magneten auf, der im bestimmungsgemäßen Einsatzzustand mit einem Magnet, vorzugsweise mit jedem Pol mit einem Gegenpol zweier Magnete der Mitnehmerhülse kraftübertragungstechnisch gekoppelt ist. Dadurch wird der Bürstenhalter sowohl rotatorisch als auch translatorisch mit der Mitnehmerhülse mitbewegt.

Die Magnetkupplung ermöglicht dabei eine besonders zweckmäßige Ausführung, bei der das Gehäuse zwischen der Mitnehmerhülse und dem Bürstenhalter fluiddicht geschlossen ist. Ein Eindringen von Fremdstoffen in das Gehäuse ist somit vorteilhaft verhindert. Beispielsweise bildet das Gehäuse hierzu einen Topf aus, in dem von der Außenseite her der Bürstenhalter und um den von der Innenseite her die Mitnehmerhülse ein- bzw. umliegen.

In einer zweckmäßigen Ausführung ist die vorstehend beschriebene Führungskulisse in die vorstehend beschriebene Mitnehmerhülse (oder in eine ("andere") Mitnehmerhülse) eingearbeitet. Auch für den Fall einer anderen als der vorstehend beschriebenen Magnetkupplung ist der Bürstenhalter zur Bewegungsübertragung mit der Mitnehmerhülse gekoppelt. Die Mitnehmerhülse ist dabei vorzugsweise translatorisch verschiebbar mit Motorwelle gekoppelt. Der vorstehend beschriebene Kulissenstein ist in diesem Fall vorzugsweise starr mit dem Gehäuse gekoppelt.

Vorzugsweise ist die Führungskulisse zur Drehzahluntersetzung ausgebildet, insbesondere indem ein Hub der über wenigstens zwei Umdrehungen der Mitnehmerhülse verteilt ist. Bspw. ist die Führungskulisse (insbesondere in "abgewickelter" Darstellung) als Sinuslinie in die Mantelfläche der Mitnehmerhülse eingearbeitet, wobei die Sinuslinie sich selbst kreuzt, so dass die gesamte Amplitude über zwei Umdrehungen verteilt ist.

In einer vorteilhaften Ausführung ist der Bürstenhalter (vorzugsweise langgestreckt und) gekröpft ausgebildet. Dadurch können auch vergleichsweise schwierig erreichbare Zahnzwischenräume erreicht werden. Vorzugsweise weist der Bürstenhalter hierbei auch eine flexible Welle zur Bewegungsübertragung auf die Interdentalbürste auf.

In einer zweckmäßigen Ausführung ist der Bürstenhalter zur Halterung einer doppelseitigen Interdentalbürste eingerichtet. Bspw. ist die Interdentalbürste hierzu um 180 Grad schwenkbar (sowie optional zur Arretierung geringfügig in Längsrichtung verschiebbar) angelenkt. Die Interdentalbürste kann hierbei bspw. zwei Bürstenköpfe mit unterschiedlichem Durchmesser aufweisen, so dass ein Nutzer unterschiedlich große Zahnabstände ohne Wechsel zwischen separaten Interdentalbürsten putzen kann.

In einer optionalen Variante kann der Energiespeicher gegen einen Druckluftgenerator getauscht werden. Dieser generiert im mit Druckluft beaufschlagten Betrieb die Energie, die ansonsten von dem Energiespeicher bereitgestellt wird. Dadurch kann der Interdentalreiniger auf einfache Weise bspw. auch in einer Zahnarztpraxis eingesetzt werden. Alternativ ist die Antriebsvorrichtung zur professionellen Anwendung aber rein mechanisch ausgebildet, so dass mittels einer Druckluftturbine der Bürstenhalter, insbesondere die Mitnehmerhülse mechanisch angetrieben wird. Mit anderen Worten entfällt in diesem Fall der vorstehend beschriebene Elektromotor.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen:
- Fig. 1: in einer schematischen, teilweise aufgebrochenen Darstellung ein Zahnzwischenraum-Reinigungsgerät,
- Fig. 2: in Darstellung gemäß Fig. 1 ein alternatives Ausführungsbeispiel des Zahnzwischenraum-Reinigungsgeräts,
- Fig. 3: in Darstellung gemäß Fig. 1 ein weiteres Ausführungsbeispiel des Zahnzwischenraum-Reinigungsgeräts,
- Fig. 4: in Darstellung gemäß Fig. 1 wiederum ein weiteres Ausführungsbeispiel des Zahnzwischenraum-Reinigungsgeräts,
- Fig. 5: in einer schematisch abgewickelten Darstellung drei Varianten einer Führungskulisse zur translatorischen Bewegung einer Zahnzwischenraumbürste des Zahnzwischenraum-Reinigungsgeräts,
- Fig. 6: in Darstellung gemäß Fig. 1 ein Ausführungsbeispiel eines Bürstenhalters des Zahnzwischenraum-Reinigungsgeräts, und
- Fig. 7: in Darstellung gemäß Fig. 1 ein weiteres Ausführungsbeispiel des Bürstenhalters des Zahnzwischenraum-Reinigungsgeräts.

Einander entsprechende Teile sind in allen Figuren stets mit gleichen Bezugszeichen versehen.

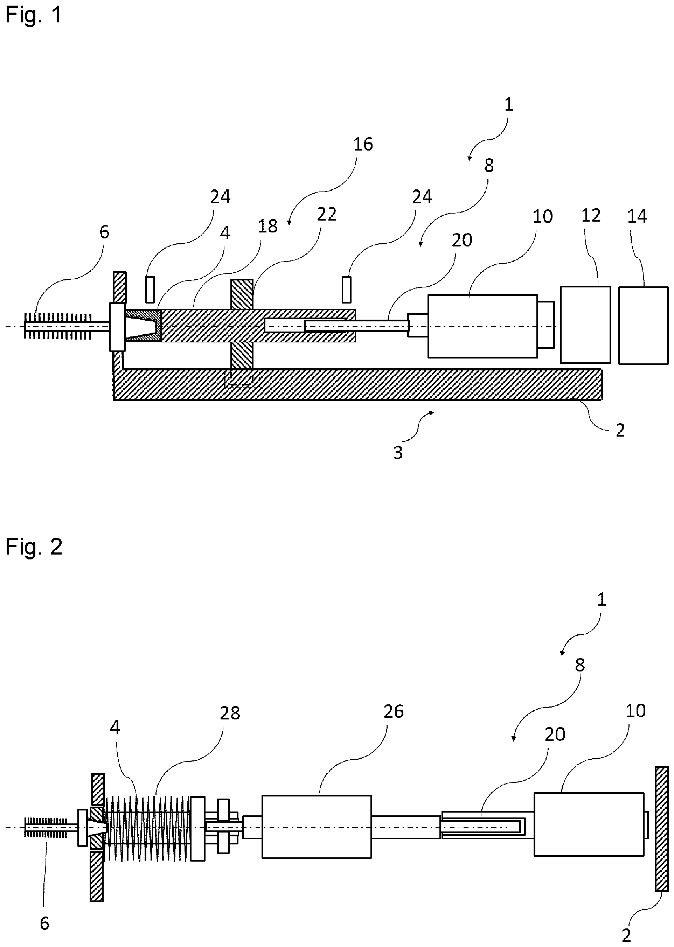

In Fig. 1 ist schematisch ein einer teilweise geschnittenen und teilweise aufgebrochenen Darstellung ein Zahnzwischenraum-Reinigungsgerät gezeigt, das im Folgenden als "Interdentalreiniger 1" bezeichnet wird. Dieser Interdentalreiniger 1 umfasst ein Gehäuse 2, das mit einem Teilbereich einen Handgriff 3 bildet, an dem der Interdentalreiniger 1 von einem Nutzer gegriffen und geführt werden kann. Des Weiteren umfasst der Interdentalreiniger 1 einen Bürstenhalter 4, der im bestimmungsgemäßen Betrieb eine Zahnzwischenraumbürste, kurz "Interdentalbürste 6" hält. Außerdem umfasst der Interdentalreiniger 1 eine Antriebsvorrichtung 8, die dazu eingerichtet ist, die Interdentalbürste 6 in Rotation zu versetzen sowie in Längsrichtung hin und her zu bewegen - d. h. eine translatorische Bewegung hervorzurufen.

Im Ausführungsbeispiel gemäß Fig. 1 umfasst die Antriebsvorrichtung 8 einen Elektromotor 10, eine Steuerelektronik 12 und einen Energiespeicher 14. Der Elektromotor 10 generiert im bestimmungsgemäßen Betrieb die Rotation der Interdentalbürste 6. Zur Erzeugung der Translation umfasst die Antriebsvorrichtung 8 einen Spindeltrieb 16. Dieser umfasst wiederum eine Gewindespindel 18, die rotatorisch starr aber in Richtung der Motorwelle 20 verschieblich mit dieser gekoppelt ist. Letzteres wird beispielsweise über ein Polygonalprofil oder eine Nutund Federverbindung mit Spiel realisiert. Die Gewindespindel 18 ist dabei starr mit dem Bürstenhalter 4 verbunden. Außerdem umfasst der Spindeltrieb 16 eine Spindelmutter 22, die unbeweglich im Gehäuse 2 gehalten ist. Dadurch wird die Gewindespindel 18 bei Rotation in ihrer Längsrichtung verschoben.

Die Antriebsvorrichtung 8 umfasst außerdem zwei Endschalter 24. Sobald diese durch die Gewindespindel 18 ausgelöst werden, initiiert die Steuerelektronik 12 eine Rotationsumkehr des Elektromotors 10, so dass sich die Gewindespindel 18 wieder zurück in Richtung auf den anderen Endschalter 24 bewegt und zugleich die Interdentalbürste 6 in die andere Richtung rotiert.

Die Steuerelektronik 12 ist mit nicht näher dargestellten Tasten gekoppelt, mittels derer die Bewegung der Interdentalbürste aktiviert werden kann und/oder die Bewegungsgeschwindigkeit variiert werden kann.

In Fig. 2 ist ein alternatives Ausführungsbeispiel dargestellt. Für die translatorische Bewegung umfasst die Antriebsvorrichtung 8 anstelle des Spindeltriebs 16 einen (elektrischen) Hubmagneten 26, der mit einer Rückstellfeder 28 zusammenwirkt und bei Aktivierung den Bürstenhalter 4 mit der Interdentalbürste 6 gegen die Rückstellfeder 28 in Längsrichtung zur Interdentalbürste 6 verstellt.

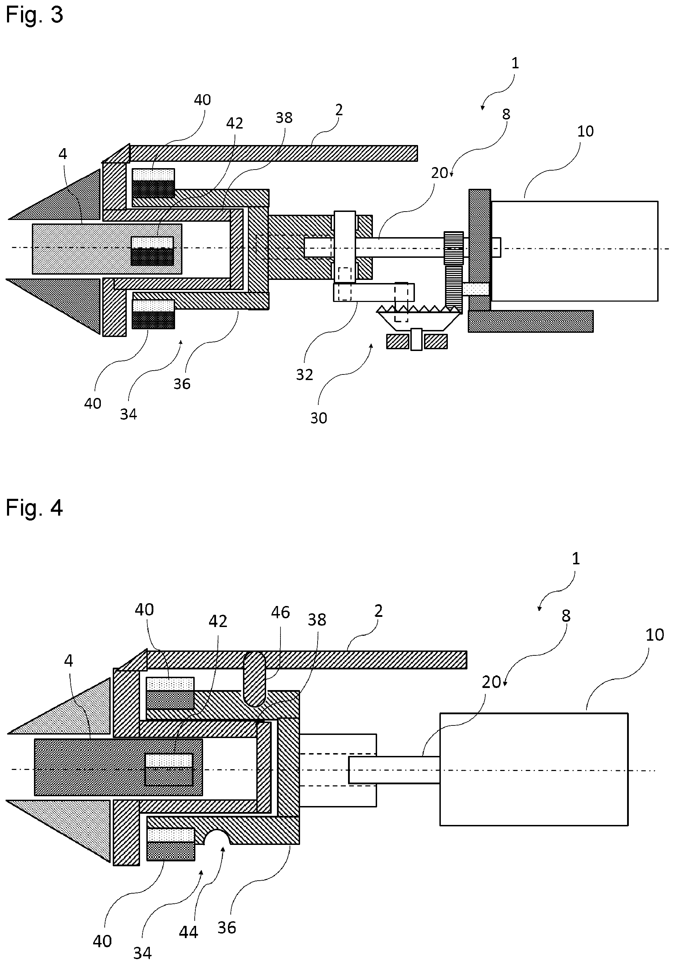

In Fig. 3 ist ein weiteres Ausführungsbeispiel darstellt. Für die translatorische Bewegung umfasst die Antriebsvorrichtung 8 ein Exzentergetriebe 30. Bei diesem wird mittels eines Pleuels 32 eine rotatorische Bewegung in die translatorische Hin- und Herbewegung übertragen.

Des Weiteren umfasst der Interdentalreiniger 1 eine Magnetkupplung 34 zwischen der Motorwelle 20 und dem Bürstenhalter 4. Dabei ist eine Mitnehmerhülse 36 mit der Motorwelle 20 drehfest verbunden. Die Mitnehmerhülse 36 umgibt einen geschlossenen Gehäusetopf 38 ebenfalls topfartig und trägt zwei Mitnehmermagnete 40. In dem Gehäusetopf 38 sitzt der Bürstenhalter 4 ein, der in dieser Ausführung einen Kopplungsmagneten 42 trägt. Dieser Kopplungsmagnet 42 koppelt mit den (gegengleich gepolten) Mitnehmermagneten 40. Dadurch erfolgt sowohl eine Rotationsübertragung als auch eine Übertragung der Translation der Mitnehmerhülse 36.

In Fig. 4 ist ein variiertes Ausführungsbeispiel zum Ausführungsbeispiel gemäß Fig. 3 dargestellt. Das Exzentergetriebe 30 ist hierbei nicht vorhanden. Für die Translation des Bürstenhalters 4 ist in die Mitnehmerhülse 36 eine Führungskulisse 44 eingearbeitet, in die ein Kulissenstein 46 eingreift. Letzterer ist mit dem Gehäuse 2 unbeweglich verbunden. Die Führungskulisse 44 beschreibt dabei eine Kurve, die schräg zur Achse der Motorwelle 20 angestellt ist.

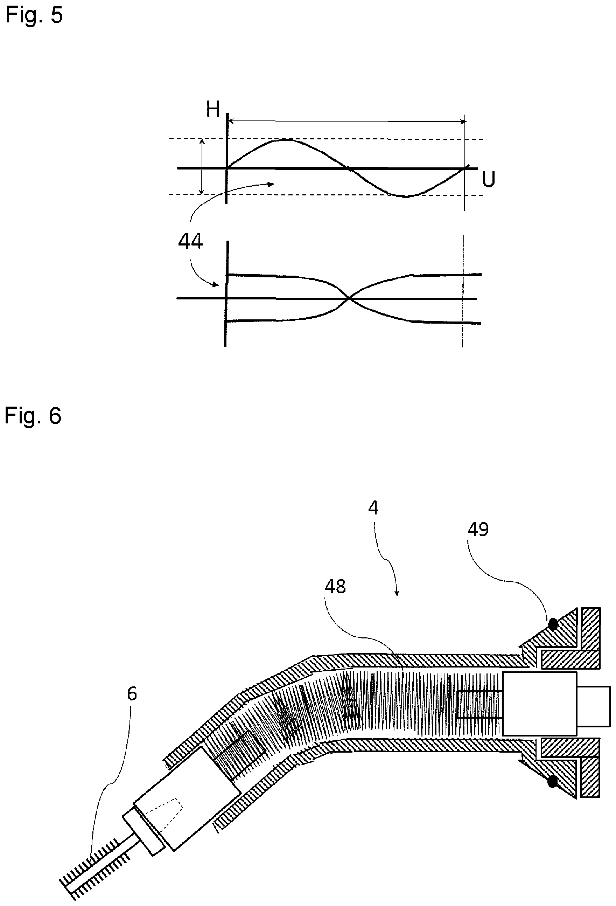

In Fig. 5 sind dabei beispielhaft zwei unterschiedliche Verläufe der durch die Führungskulisse 44 beschriebenen Kurve abgewickelt über eine Umdrehung U der Mitnehmerhülse 36 dargestellt. Die zuoberst dargestellte Kurve bildet einen Sinusverlauf nach, bei dem pro Umdrehung U der Mitnehmerhülse 36 ein vollständiger Hub H des Bürstenhalters 4 vollzogen wird.

Der untere Verlauf stellt eine Untersetzung dar, wobei die Führungskulisse 44 (in abgewickelter Darstellung) etwa eine liegende Acht nachbildet und sich somit selbst einmal kreuzt. Dadurch wird mithin bei einer Umdrehung U nur ein halber Hub H vollzogen.

In Fig. 6 ist eine Variante des Bürstenhalters 4 dargestellt. Der Bürstenhalter 4 ist dabei gekröpft und weist eine flexible Welle 48 auf. Dadurch kann die Rotation und die Translation über die Kröpfung hinweg auf die Interdentalbürste 6 übertragen werden.

Der Bürstenhalter 4 weist hierbei optional auch einen Codierring 49 auf, um nutzerspezifisch jeweils einen Bürstenhalter 4 zuordnen zu können, bspw. mittels farblicher Codierung.

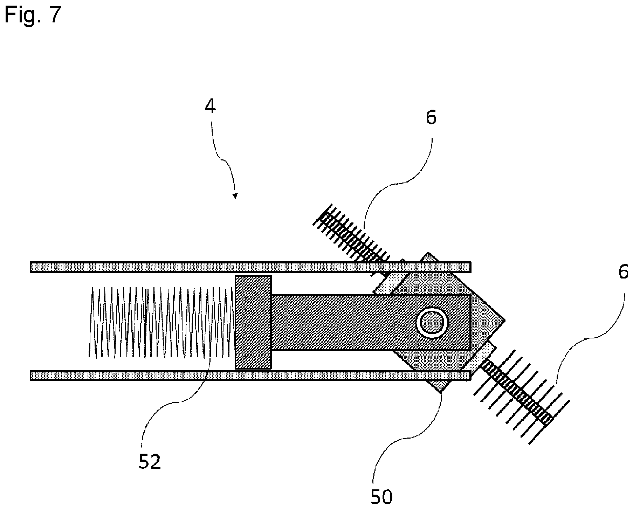

In Fig. 7 ist eine weitere Variante des Bürstenhalters 4 dargestellt. Der Bürstenhalter 4 ist dabei dazu ausgebildet, eine Doppelbürste, d. h. zwei unterschiedliche Interdentalbürsten 6 an einem Träger 50, zu halten. Die beiden Interdentalbürsten 6 sind dabei 180 Grad gegeneinander gerichtet an dem Träger 50 befestigt und können in dem Bürstenhalter 4 verdreht werden. Bspw. ist der Träger 50 in einem Langloch gegen eine Feder 52 verspannt gelagert und kann gegen die Federkraft in einen Bereich des Bürstenhalters 4 verschoben werden, in dem eine Schwenkung des Trägers 50 freigegeben ist.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 1: Interdentalreiniger
- 2: Gehäuse
- 3: Handgriff
- 4: Bürstenhalter
- 6: Interdentalbürste
- 8: Antriebsvorrichtung
- 10: Elektromotor
- 12: Steuerelektronik
- 14: Energiespeicher
- 16: Spindeltrieb
- 18: Gewindespindel
- 20: Motorwelle
- 22: Spindelmutter
- 24: Endschalter
- 26: Hubmagnet
- 28: Rückstellfeder
- 30: Exzentergetriebe
- 32: Pleuel
- 34: Magnetkupplung
- 36: Mitnehmerhülse
- 38: Gehäusetopf
- 40: Mitnehmermagnet
- 42: Kopplungsmagnet
- 44: Führungskulisse
- 46: Kulissenstein
- 48: Welle
- 49: Codierring
- 50: Träger
- 52: Feder
- H: Hub
- U: Umdrehung

## Patentansprüche

1. Zahnzwischenraum-Reinigungsgerät (1), aufweisend
- ein einen Handgriff (3) bildendes Gehäuse (2),
- einen Bürstenhalter (4) zur Halterung einer Zahnzwischenraumbürste (6), und
- eine Antriebsvorrichtung (8), die dazu eingerichtet ist, eine rotatorische sowie eine translatorische Bewegung des Bürstenhalters (4) zu erzeugen,
**dadurch gekennzeichnet, dass**
die Antriebsvorrichtung (8) eine Mitnehmerhülse (36) aufweist, wobei der Bürstenhalter (4) mittels einer Magnetkupplung (34) mit der Mitnehmerhülse (36) gekoppelt ist, und dass die Mitnehmerhülse (36) einen geschlossenen Gehäusetopf (38) topfartig umgibt und zwei Mitnehmermagnete (40) trägt, wobei der Bürstenhalter (4) in dem Gehäusetopf (38) einsitzt und wobei der Bürstenhalter (4) einen Kopplungsmagneten (42)
zur Kopplung mit den Mitnehmermagneten (40) für die Übertragung der Rotation und der Translation trägt.

2. Zahnzwischenraum-Reinigungsgerät (1) nach Anspruch 1,
wobei das Gehäuse (2) zwischen der Mitnehmerhülse (36) und dem Bürstenhalter (4) fluiddicht geschlossen ist.

3. Zahnzwischenraum-Reinigungsgerät (1) nach Anspruch 1 oder 2,
wobei die Antriebsvorrichtung (8) elektromechanisch ausgebildet ist.

4. Zahnzwischenraum-Reinigungsgerät (1) nach Anspruch 3,
wobei die Antriebsvorrichtung (8) einen Elektromotor (10) umfasst.

5. Zahnzwischenraum-Reinigungsgerät (1) nach Anspruch 1 und 4,
wobei die Mitnehmerhülse (36) mit einer Motorwelle (20) des Elektromotors (10) drehfest verbunden ist.

6. Zahnzwischenraum-Reinigungsgerät (1) nach Anspruch 1,
wobei die Antriebsvorrichtung ein Exzenter-Getriebe (30) aufweist, das, insbesondere mittels einer Art Pleuel (32), den Bürstenhalter (4) zur translatorischen Bewegung antreibt.

7. Zahnzwischenraum-Reinigungsgerät (1) nach einem der Ansprüche 1 bis 6, wobei der Bürstenhalter (4) gekröpft ausgebildet ist und eine flexible Welle (52) zur Bewegungsübertragung auf die Zahnzwischenraumbürste (6) aufweist.

8. Zahnzwischenraum-Reinigungsgerät (1) nach einem der Ansprüche 1 bis 7, mit einer Steuerungselektronik (12), die dazu eingerichtet ist, eine wiederkehrende Rotationsumkehr durchzuführen.

9. Zahnzwischenraum-Reinigungsgerät (1) nach einem der Ansprüche 1 bis 8, wobei der Bürstenhalter (4) zur Halterung einer doppelseitigen Zahnzwischenraumbürste (6) eingerichtet ist.

## Claims

1. Device (1) for cleaning interdental spaces, having
- a housing (2) forming a handle (3),
- a brush holder (4) for holding an interdental space brush (6), and
- a drive device (8), which is designed to generate a rotational and a translational movement of the brush holder (4),
**characterized in that**
the drive device (8) has a driver sleeve (36), wherein the brush holder (4) is coupled to the driver sleeve (36) by means of a magnetic coupling (34),
and **in that** the driver sleeve (36) surrounds a closed housing pot (38) in a pot-like manner and carries two driver magnets (40), wherein the brush holder (4) sits in the housing pot (38), and wherein the brush holder (4) carries a coupling magnet (42) for coupling to the driver magnets (40) for the transfer of the rotation and the translation.

2. Device (1) for cleaning interdental spaces according to Claim 1,
wherein the housing (2) is closed fluid-tight between the driver sleeve (36) and the brush holder (4) .

3. Device (1) for cleaning interdental spaces according to Claim 1 or 2,
wherein the drive device (8) is electromechanical.

4. Device (1) for cleaning interdental spaces according to Claim 3,
wherein the drive device (8) comprises an electric motor (10).

5. Device (1) for cleaning interdental spaces according to Claims 1 and 4,
wherein the driver sleeve (36) is connected to a motor shaft (20) of the electric motor (10) for conjoint rotation.

6. Device (1) for cleaning interdental spaces according to Claim 1,
wherein the drive device has an eccentric transmission (30), which drives the brush holder (4) for translational movement, in particular by means of a type of connecting rod (32).

7. Device (1) for cleaning interdental spaces according to one of Claims 1 to 6,
wherein the brush holder (4) is elbowed and has a flexible shaft (52) for transferring movement to the interdental space brush (6).

8. Device (1) for cleaning interdental spaces according to one of Claims 1 to 7,
comprising control electronics (12), which are designed to perform a recurrent rotation reversal.

9. Device (1) for cleaning interdental spaces according to one of Claims 1 to 8,
wherein the brush holder (4) is designed for holding a double-sided interdental space brush (6).

## Revendications

1. Appareil de nettoyage des espaces interdentaires (1), présentant
- un boîtier (2) formant un manche (3),
- un porte-brosse (4) pour le maintien d'une brosse interdentaire (6), et
- un dispositif d'entraînement (8) qui est adapté pour produire un mouvement de rotation ainsi qu'un mouvement de translation du porte-brosse (4),
**caractérisé en ce que**
le dispositif d'entraînement (8) présente une douille d'entraîneur (36), le porte-brosse (4) étant couplé à la douille d'entraîneur (36) au moyen d'un couplage magnétique (34), et **en ce que** la douille d'entraîneur (36) entoure un pot de boîtier fermé (38) à la manière d'un pot et porte deux aimants d'entraîneur (40), le porte-brosse (4) étant logé dans le pot de boîtier (38) et le porte-brosse (4) portant un aimant de couplage (42) pour le couplage avec les aimants d'entraîneur (40) pour la transmission de la rotation et de la translation.

2. Appareil de nettoyage des espaces interdentaires (1) selon la revendication 1, dans lequel le boîtier (2) est fermé de manière étanche aux fluides entre la douille d'entraîneur (36) et le porte-brosse (4).

3. Appareil de nettoyage des espaces interdentaires (1) selon la revendication 1 ou 2, dans lequel le dispositif d'entraînement (8) est réalisé sous forme électromécanique.

4. Appareil de nettoyage des espaces interdentaires (1) selon la revendication 3, dans lequel le dispositif d'entraînement (8) comprend un moteur électrique (10).

5. Appareil de nettoyage des espaces interdentaires (1) selon les revendications 1 et 4, dans lequel la douille d'entraîneur (36) est reliée de manière solidaire en rotation à un arbre moteur (20) du moteur électrique (10) .

6. Appareil de nettoyage des espaces interdentaires (1) selon la revendication 1, dans lequel le dispositif d'entraînement présente un engrenage excentrique (30) qui, notamment au moyen d'une sorte de bielle (32), entraîne le porte-brosse (4) dans le mouvement de translation.

7. Appareil de nettoyage des espaces interdentaires (1) selon l'une quelconque des revendications 1 à 6, dans lequel le porte-brosse (4) est réalisé sous forme coudée et présente un arbre flexible (52) pour la transmission du mouvement à la brosse interdentaire (6).

8. Appareil de nettoyage des espaces interdentaires (1) selon l'une quelconque des revendications 1 à 7, avec une électronique de commande (12) qui est adaptée pour effectuer une inversion de rotation répétitive.

9. Appareil de nettoyage des espaces interdentaires (1) selon l'une quelconque des revendications 1 à 8, dans lequel le porte-brosse (4) est adapté pour supporter une brosse interdentaire (6) à double face.
